# EUROPEAN PATENT APPLICATION

(11) **EP 1 327 811 A1**
(43) Date of publication of application: **16.07.2003**
(21) Application number: 02258721.6
(22) Date of filing: 18.12.2002
(51) Int. Cl.: F16L 25/00, F16L 37/084

(54) **Couplings for corrugated pipes**

(30) Priority: 10.01.2002 GB 0200455
(71) Applicant: Cable Management Products Limited, London NW11 8DS (GB)
(72) Inventor: Youssefifar, Fatollah, Cheadle, Cheshire SK8 1NT (GB)
(74) Representative: Flint, Jonathan McNeill

(57) **Abstract**

A coupling for a corrugated pipe (1) is moulded from a plastics material with two locking arms (27) and (28) on opposite sides. The locking arms (27) and (28) are hinged at one end (30) and have an inwardly-projecting tooth (29) at their other end shaped to extend between corrugations (11) on the pipe. One side of each locking arm (27) and (28) is formed with a stop (131) that projects beyond the tooth (29) and is adapted to contact a corrugation (11) on the pipe when force is applied to pull the pipe out of the coupling, so as to limit inward deflection of the locking arms.

## Description

This invention relates to pipe couplings of the kind for a corrugated pipe, the coupling including a housing and a catch for retaining the pipe within the housing, the catch being hinged with the housing at one end and having an inwardly directed projection towards its opposite end adapted to extend between corrugations on the pipe.

Connection to a corrugated pipe or conduit can be made by means of a coupling in which the end of the pipe is inserted, the coupling having a retaining member in the form of a resilient tooth that engages between corrugations to prevent the pipe and coupling being pulled apart after assembly. The coupling may have a tapering bore forming a close fit with the outside of the pipe so as to seal the pipe with the coupling. Couplings of this kind are described, for example, in US5094482, US5041256, GB2225550, US5150930 and US4923227 and are sold by Adaptaflex Limited of Coleshill, Birmingham, UK.

It is an object of the present invention to provide an alternative pipe coupling.

According to the present invention there is provided a coupling of the above-specified kind, characterised in that the catch has a portion extending beyond the projection away from the one end and adapted to engage a corrugation on the pipe when force is applied to pull the pipe out of the coupling so as to limit inward deflection of the catch

The portion extending beyond the projection preferably extends to one side of the projection. The coupling preferably includes two catch members on opposite sides of the coupling, which may be moulded from a plastics material.

A coupling and an assembly of the coupling on a conduit according to the present invention, will now be described, by way of example, with reference to the accompanying drawings, in which:
- Figure 1: is a side elevation view of the assembly of coupling and conduit;
- Figure 2: is a sectional side elevation view of the coupling; and
- Figure 3: is a perspective, cut-away view showing the inside of the coupling.

The assembly comprises a conduit 1 and a coupling 2 fitted on the forward, left-hand end 10 of the conduit.

The conduit 1 is entirely conventional and is of a rigid but bendable plastics material with a circular section and has corrugations 11 on its external and internal surfaces. The left-hand end 10 of the conduit 1 is cut square.

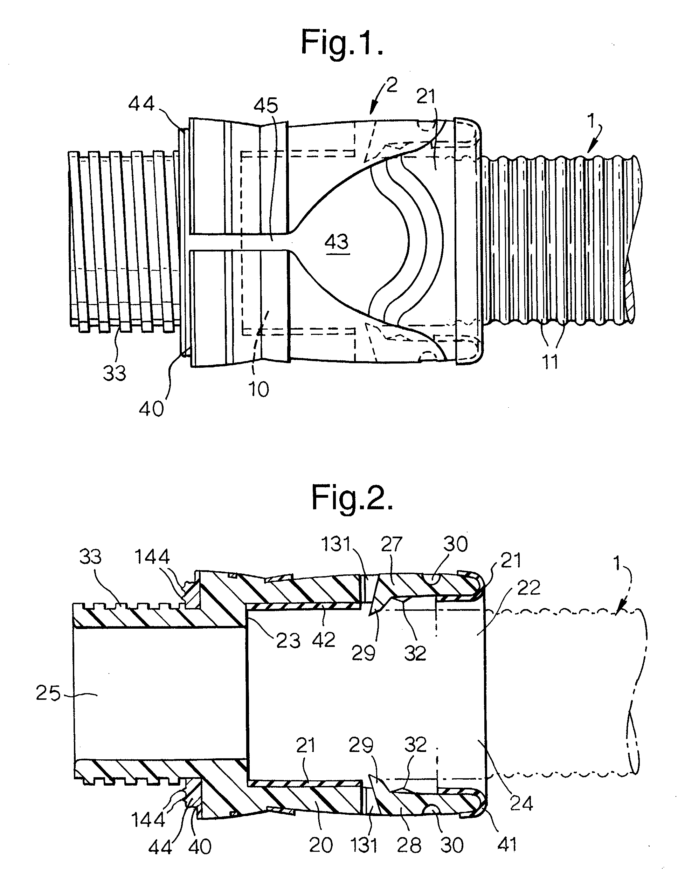

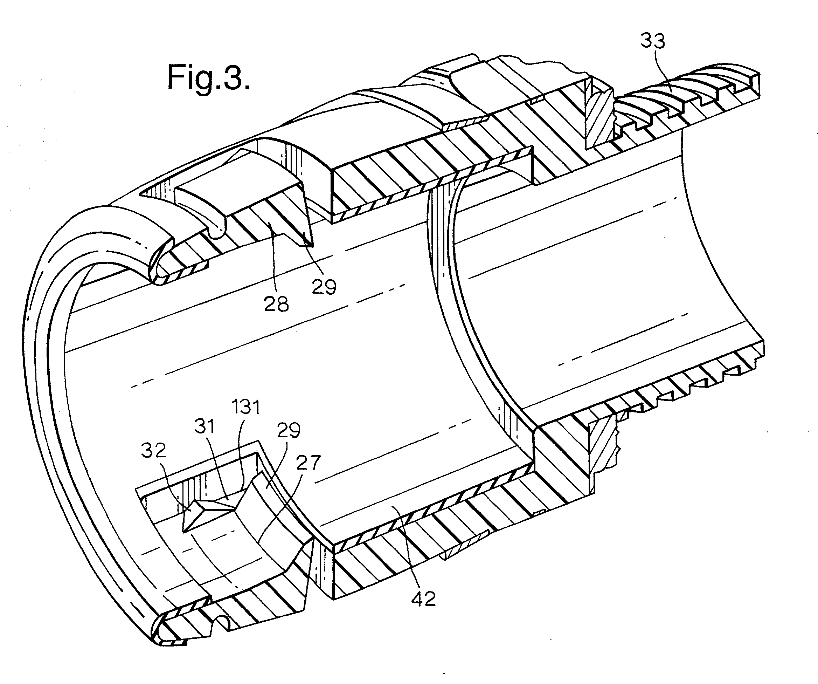

The coupling 2 comprises two parts joined with one another, namely a body or housing 20 and a layer 21. The housing 20 is similar to previous housings, being a single-piece moulding of a rigid plastics material of substantially tubular shape. The housing 20 has a bore 22 extending axially along its length and divided by a shoulder 23 into two portions, namely an entrance portion 24 and an exit portion 25. The rear entrance portion 24 at the right-hand end of the housing 20 receives the end of the conduit 1 and a tapers slightly along its length. The forward, exit portion 25 has a reduced constant diameter. Towards its right-hand end, the housing 20 is formed with retaining means in the form of two retaining or locking arms or catches 27 and 28 each having an inwardly-extending tooth 29 at its free, left-hand end extending across the central region of the arms. The coupling could have any number of one or more locking arms. The right-hand end of each arm 27 and 28 is attached integrally with the housing 20 by a hinge portion 30 of reduced thickness, which enables the arms to be flexed resiliently outwardly. Each arm 27 and 28 has two opposite side regions 31, which are formed with a shallow ramp 32 of triangular section just rearwardly of the teeth 29. The purpose of the ramps 32 is to aid removal of the coupling from its mould tool in the manner described in GB 2225550. The side regions 31 project to the left forwardly beyond the teeth 29 a short distance to form stops 131. The purpose of these stops 131 is to engage the outside surface of the corrugations 11 on the conduit 1 when the arms 27 and 28 are deflected inwardly as a result of a high force applied to pull the conduit out of the coupling 2. The stops 131 limit how far the arms 27 and 28 can be pulled in and, therefore, reduce the risk of damage to the arms. The natural position of the locking arms 27 and 28 is with their teeth 29 projecting slightly into the bore 22, as shown in Figures 2 and 3.

The forward, left-hand end of the housing 20 has an external screw thread 33 by which the coupling 2 can be screwed into a cooperating female coupling (not shown). Instead of a screw thread, the housing could have other forms of fixing formation, such as barbs or spring catches. Externally, the housing 20 has a forwardly-facing face or ledge 40 at the location of the inner shoulder 23.

The layer 21 is of a deformable, resilient thermoplastics material, preferably an elastomer. The layer 21 covers the entire tapered inner surface of the entrance portion 24, the right-hand end face 41 of the housing 20 and other parts of the outer surface of the housing.

That part of the layer 21 on the inside of the housing 20 provides an elastomeric seal 42 with the outside of the conduit 1. The dimensions of the housing 20, angle of taper and thickness of the layer 21 are such that the effective diameter of the bore 22 at the right-hand end is slightly greater than the external diameter of the conduit 1 and, at its left-hand end, is slightly smaller than the external diameter of the conduit. This arrangement is such that the end 10 of the conduit 1 can be pushed into the entrance portion 24 of the bore 22 but is prevented by contact with the tapering surface from contacting the shoulder 23. In this way, the seal 42 is compressed slightly into a tight sealing contact with the outside of the conduit 1 at its forward end 10.

An outer region 43 on one side of the housing 20 towards its left-hand end is covered by the layer 21 and is of a generally tulip shape. There is a corresponding region on the opposite side of the housing. These parts of the layer 21 provide manual gripping regions 43 to enable the coupling 2 to be held more securely by the hand. The layer 21 also provides an annular flange 44 on the external ledge 40, which has two concentric sealing ribs 144. The flange 44 and tulip-shape area 43 are continuous with one another via a stem portion 45. The flange 44 provides a washer or seal with the end of a cooperating coupling (not shown) screwed onto the threaded portion 33. Alternatively, the flange 44 may seal against the face of a panel around an opening through which the coupling extends. This flange portion 44 can be omitted or provided by a separate component.

In use, the coupling 2 is provided as a single component. The user simply pushes the forward end 10 of the conduit 1 into the rear end of the housing 20, so that the teeth 29 on the locking arms 27 and 28 ride over corrugations 11 on the conduit. The forward end 10 of the conduit 1 deforms the seal 42 outwardly slightly as it is pushed into the entrance portion 24. Rearward movement of the conduit 1 is prevented by the locking arms 27 and 28, which engage the conduit more tightly as force is applied to separate the conduit and coupling. The conduit 1 holds the material of the seal part 42 compressed between the outside of the conduit and the inside of the housing 20 to provide an effective seal.

This arrangement provides a coupling for corrugated pipes that can withstand high withdrawal forces.

It will be appreciated that the invention is not limited to use with conduits but could be used on other forms of pipe.

## Claims

1. A coupling for a corrugated pipe (1), the coupling including a housing (20) and a catch (7, 8) for retaining the pipe within the housing, the catch (7, 8) being hinged with the housing (20) at one end (30) and having an inwardly directed projection (29) towards its opposite end adapted to extend between corrugations (11) on the pipe (1), **characterised in that** the catch (7, 8) has a portion (131) extending beyond the projection (29) away from the one end (30) and adapted to engage a corrugation (11) on the pipe (1) when force is applied to pull the pipe out of the coupling so as to limit inward deflection of the catch (7, 8).

2. A coupling according to Claim 1, **characterised in that** the portion (131) extending beyond the projection (29) extends to one side of the projection.

3. A coupling according to Claim 1 or 2, **characterised in that** the coupling includes two catch members (7 and 8) on opposite sides of the coupling.

4. A coupling according to any one of the preceding claims, **characterised in that** the coupling is moulded from a plastics material.
